# EUROPÄISCHE PATENTSCHRIFT

(11) **EP 1 789 857 B1**
(45) Veröffentlichungstag und Bekanntmachung des Hinweises auf die Patenterteilung: **02.12.2009**
(21) Anmeldenummer: 05785677.5
(22) Anmeldetag: 16.09.2005
(51) Int. Cl.: G05B 19/042, H04L 1/00

(54) **DATENÜBERTRAGUNGSVERFAHREN UND AUTOMATISIERUNGSSYSTEM ZUM EINSATZ EINES SOLCHEN DATENÜBERTRAGUNGSVERFAHRENS**
DATA TRANSFER METHOD AND AUTOMATION SYSTEM USED IN SAID DATA TRANSFER METHOD
PROCÉDÉ DE TRANSMISSION DE DONNÉES ET SYSTÈME D'AUTOMATISATION DESTINÉ À LA MISE EN OEUVRE D'UN TEL PROCÉDÉ DE TRANSMISSION DE DONNÉES

(30) Priorität: 16.09.2004 DE 102004044764; 01.03.2005 DE 102005009224
(43) Veröffentlichungstag der Anmeldung: 30.05.2007
(73) Patentinhaber: Beckhoff Automation GmbH, 33415 Verl (DE)
(72) Erfinder: BÜTTNER, Holger, 12157 Berlin (DE); SACHS, Jens, 32469 Petershage (DE)
(74) Vertreter: Wilhelm, Jürgen
(86) Internationale Anmeldenummer: PCT/EP2005/010020
(87) Internationale Veröffentlichungsnummer: WO 2006/029899

(56) Entgegenhaltungen:
- WO-A-02/35761
- WO-A-99/49373

## Beschreibung

Die Erfindung betrifft ein Verfahren zum Übertragen von Datenpaketen auf einer Datenübertragungsstrecke zwischen zwei Kommunikationsteilnehmern und ein Automatisierungssystem mit zwei über eine Datenübertragungsstrecke verbundenen Kommunikationsteilnehmer, die jeweils eine Anschalteinheit aufweisen.

In Automatisierungssystemen zum Steuern von Maschinen muss sichergestellt sein, dass auch dann, wenn das Automatisierungssystem ausfällt, keine Gefahr für Mensch und Umwelt besteht. Automatisierungssysteme arbeiten deshalb in der Regel nach dem sog. Fail-Safe-Prinzip, gemäß dem das Automatisierungssystem beim Ausfall wichtiger Komponenten in einen sicheren Zustand übergeht. Wesentliche Anforderungen an das Automatisierungssystem beim Ausführen von sicherheitsrelevanten Steuerfunktionen nach dem Fail-Safe-Prinzip sind dabei, dass die Prozessdaten der Maschinensensoren beim Ausführen der Sicherheitssteuerfunktionen aktuell und nicht verfälscht verarbeitet werden und den Maschinenaktoren immer ein sicherer Prozesszustand angezeigt wird.

Bei Automatisierungssystemen ist die Anzahl der sicherheitsrelevanten Steuerfunktionen in der Regel jedoch wesentlich geringer als die Anzahl der nicht-sicherheitsrelevanten Steuerfunktionen, die zum Aufrechterhalten des Normalbetriebs im Automatisierungssystem dienen. Um zu gewährleisten, dass die Funktionalität von sicherheitsrelevanten Steuerfunktionen nicht durch nicht-sicherheitsrelevante Steuerfunktionen im Automatisierungssystem beeinflusst wird, sind die sicherheitsrelevanten Steuerfunktionen herkömmlicherweise in einem eigenständigen, gegen die nicht-sicherheitsrelevanten Steuerfunktionen abgeschotteten Sicherheitsprogramm zusammengefasst.

Eine vollständige Trennung von sicherheitsrelevanten und nicht-sicherheitsrelevanten Steuerfunktionen wird erreicht, wenn das Sicherheitsprogramm auf einem eigenständigen Automatisierungsrechner ausgeführt wird, der oft auch mit einer eigenen Verdrahtung mit den Not-Aus-Schaltern, Lichtschranken und weiteren Komponenten, die die Maschinensicherheit gewährleisten, verbunden ist. Um diesen zusätzlichen Hardware-Aufwand durch einen zusätzlichen Automatisierungsrechner im Automatisierungssystem zu reduzieren, sind bereits Automatisierungssysteme bekannt, bei denen ein Sicherheitsprogramm und ein nicht-sicherheitsrelevantes Steuerprogramm auf denselben Hardware-Komponenten durch Erweiterung des nicht-sicherheitsrelevanten Steuerprogramms um einen sogenannten Sicherheitslayer realisiert werden.

Moderne Automatisierungssysteme sind in der Regel dezentral ausgelegt, wobei die Prozessperipherie, d. h. die Sensor- bzw. Aktorebene mit den Steuerungsrechnern über lokale Netzwerke, vorzugsweise ein Feldbussystem kommunizieren. Zur Maschinensteuerung werden von den Steuerungsrechnern die Eingangssignale der Steuerprogramme über den Feldbus von der Prozessperipherie eingelesen und nach Echtzeitverarbeitung durch den Steuerungsrechner die Ausgangssignale über den Feldbus an die Prozessperipherie ausgegeben. Um über den Feldbus des Automatisierungssystems gleichzeitig auch Prozesssignale eines Sicherheitsprogramms übertragen zu können, ist das Feldbussystem um einen sogenannten Sicherheitslayer erweitert, der die Wahrscheinlichkeit, dass durch eine Störung die Übertragung der Daten zwischen der Prozessperipherie und den Steuerungsrechnern so verfälscht wird, dass diese Verfälschung nicht mehr erkannt wird, auf ein zulässiges Mindestmaß minimiert, so dass der Feldbus auch zur Übertragung von sicherheitsrelevanten Daten genutzt werden kann.

Solche zusätzlichen Sicherheitslayer bei Feldbussystemen beinhalten in der Regel eine zusätzliche Adressbeziehung zwischen den beiden Kommunikationsteilnehmern am Feldbus, um eine eindeutige Zuordnung zu ermöglichen. Weiterhin ist das zwischen den Kommunikationsteilnehmern übertragene sicherheitsrelevante Datenpaket mit einem zusätzlichen Prüfzeichen versehen, dass aus den übertragenen Prozessdaten bzw. Adressen berechnet wird, um eine Datenverfälschung zuverlässig erkennen zu können. Um die korrekte Reihenfolge der zu übertragenen sicherheitsrelevanten Prozessdaten und deren rechzeitiges Eintreffen bei den Kommunikationsteilnehmern überprüfen zu können, ist das sicherheitsrelevante Datenpaket außerdem in der Regel mit einer fortlaufenden Sequenznummer versehen. Die Sequenznummer wird dabei in der Regel einem vorgegebenen Nummernblock entnommen, der nach dem vollständigen Durchlauf dann wieder zurückgesetzt wird.

Ein bekanntes Automatisierungssystem, bei dem das Steuerprogramm und das Sicherheitsprogramm auf denselben Hardware-Komponenten realisiert werden können, ist das Simatic-System der Firma Siemens. Als Feldbussystem wird dabei das Profibus-System eingesetzt, das um ein sogenanntes Profisafe-Protokoll zur Übertragung von sicherheitsrelevanten Datenpaketen erweitert ist. Die Erweiterung des Automatisierungssystems mit dem Sicherheitsprogramm ist jedoch nur im Rahmen dieser genau festgelegten Konfigurations- und Datenverarbeitungsumgebung möglich.

In Automatisierungssystemen wird jedoch neben den bekannten proprietären Feldbusprotokollen zunehmend das Ethernet-Protokoll zur Übertragung von Prozesssignalen genutzt. Das Ethernet-Protokoll stellt in der Bürokommunikation die am weitesten verbreitete Technologie dar, mit der in lokalen Kommunikationsnetzen Daten mit hohen Geschwindigkeiten übertragen werden. Aufgrund der Vorteile des Ethernet-Konzept bei der Nutzung von Standard-Hardware- und -Software-Komponenten sowie die Möglichkeit bei einfacher Vernetzungstechnologie hohe Datenübertragungsraten zu erreichen, werden Ethernet-Feldbussysteme zunehmend auch in der industriellen Fertigung zum Datenaustausch zwischen der Aktor-Sensor-Ebene und den Steuerungsrechnern eingesetzt.

Wünschenswert wäre es deshalb auch Ethernet-Feldbussysteme mit einem Sicherheitslayer ausstatten zu können, um so.neben herkömmlichen Steuerprogrammen auch Sicherheitsprogramme auf dem Ethernet-Feldbus ausführen zu können. Ethernet-Netzwerke sind aber in der Regel mithilfe sogenannter Switches strukturiert, um Datenkollisionen auf dem Netzwerk zu vermeiden. Switches sind Datenpaketvermittlungsknoten mit mehreren Ein- und Ausgängen, wobei das auf einem Eingang ankommende Datenpaket ausschließlich auf den Ausgang durchgeschaltet wird, welcher die Empfängerstation kennt. Bei der Datenpaketvermittlung über Switches in einem Ethernet-Netzwerk treten jedoch Zeitverzögerungen auf, da das vom Switch auf dem einen Eingang empfangene Datenpaket zwischengespeichert und dann erst auf den gewünschten Ausgang durchgeschaltet wird.

Durch die verzögerte Weitergabe der Datenpakete in dem mit Switches ausgestatteten Ethernet besteht bei den herkömmlichen Sicherheitslayern, wie dem Profisafe-Protokoll aber die Gefahr, dass ein fehlerhafter Prozesszustand auftritt. Da die Sicherheits-Datenpakete mit einer fortlaufenden Sequenznummer aus einem Nummernblock mit einer vorgegebenen Anzahl von Nummern versehen sind, kann durch die Zwischenspeicherung der Datenpakete im Switch die Sequenznummer überlaufen, was dann dazu führen kann, dass falsche Sicherheitsdaten übertragen werden. Beim Profisafe-Protokoll z. B. werden die Sicherheitsdatenpakete mit einer 8-Bit-Sequenz-Nummer übertragen, d. h. ein Datenpaket, bei dem sich die Prozessdaten nicht ändern, wiederholt sich alle 255 Zyklen bei der Datenübertragung im Automatisierungssystem, da dann die Sequenznummer überläuft, wobei 0 eine nicht erlaubte Sequenznummer ist. In der Konsequenz kann dann z. B. ein Not-Aus-Schalter nicht rechtzeitig erkannt oder ein Maschinenschutz nicht rechtzeitig abgeschaltet und somit kein sicherer Prozesszustand der Maschinen im Automatisierungssystem gewährleistet werden.

Aus der WO 99/49373 ist weiter ein Verfahren zum Betreiben eines Automatisierungssystems bekannt, bei dem fehlersichere Informationen zyklisch mit einem Sicherheitsprotokoll ausgetauscht werden. Um Daten, die bei mehrfacher Übertragung unverändert bleiben, nur einmal übertragen zu müssen, sind die Datenpakete in einen statischen und einen dynamischen Teil aufgeteilt worden, wobei das statische Datenpaketteil nur in einer Initialisierungsphase zwischen den Kommunikationsteilnehmern am Feldbussystem übertragen wird. Der statische Datenpaketteil bildet dabei den Startwert zur Prüfzeichenberechnung des dynamischen Datenpaketteils. Das Ausbleiben eines neuen Datenpakets innerhalb einer vorgegebenen Toleranzzeit wird dabei als Fehlersituation gewertet. Bei dem Einsatz eines solchen Sicherheitslayers mit zyklischer Datenpaketübertragung auf einem Ethernet-Netzwerk mit Switches besteht weiterhin die Gefahr eines fehlerhaften Prozesszustands durch die verzögerte Weitergabe der Datenpakete durch den Switch. Außerdem muss auf eine genaue Einhaltung der zeitlichen Rahmenbedingungen geachtet werden.

Aufgabe der vorliegenden Erfindung ist es, ein Verfahren zum Übertragen von Datenpaketen auf einer Datenübertragungsstrecke zwischen zwei Kommunikationsteilnehmern und ein zugehöriges Automatisierungssystem bereitzustellen, die gewährleistet, dass Prozesssignale zum Ausführen von sicherheitsrelevanten Steuerfunktionen aktuell und nicht verfälscht verarbeitet werden und den Aktoren des Automatisierungssystems immer ein sicherer Prozesszustand angezeigt wird.

Diese Aufgabe wird erfindungsgemäß mit einem Verfahren gemäß Anspruch 1 und einem Automatisierungssystem gemäß Anspruch 15 gelöst. Bevorzugte Weiterbildungen sind in den abhängigen Ansprüchen angegeben.

Gemäß der Erfindung wird zum Übertragen von Datenpaketen auf einer Datenübertragungsstrecke zwischen zwei Kommunikationsteilnehmern in einem Automatisierungssystem jedes Datenpaket mit einem Prüfzeichen versehen, das aus den weiteren Daten des Datenpakets berechnet wird, wobei als Startwert zur Berechnung des Prüfzeichens für ein an den anderen Kommunikationsteilnehmer zu sendendes Datenpaket das Prüfzeichen des letzten von dem anderen Kommunikationsteilnehmer empfangenen Datenpakets verwendet wird.

Mit der erfindungsgemäßen Vorgehensweise besteht die Möglichkeit, auch bei Automatisierungssystemen deren Datenübertragung über einen Ethernet-Feldbus ausgeführt wird, der zudem Switches als Datenpaketvermittlungsknoten enthalten kann, Steuerungsprogramme mit einem Sicherheitslayer zu erweitern, der die Übertragung von sicherheitsrelevanten Daten gewährleistet. Durch das Übernehmen des Prüfzeichens, das im letzten empfangenen Datenpaket enthalten ist, als Startwert zur Berechnung des Prüfzeichens des nächsten zu sendenden Datenpakets wird nämlich verhindert, dass wie beim Profisafe-Protokoll in einer Datenpaketfolge sich die Datenpakete identisch wiederholen können. Es besteht somit keine Gefahr, dass dann, wenn bei der Datenübertragung die Datenpakete z. B. im Ethernet-Netzwerk durch Switches zwischengespeichert werden, aufgrund von Vertauschungen Datenpakete nicht richtig erkannt werden. Durch die erfindungsgemäße fortlaufende dynamische Erzeugung der Prüfzeichen treten innerhalb einer Datenpaketfolge keine identischen Datenpakete auf.

Gemäß einer ersten bevorzugten Ausführungsform wird die Korrektheit eines von einem Kommunikationsteilnehmer empfangenes Datenpaket überprüft, indem das Prüfzeichen des empfangenen Datenpakets berechnet und mit dem in dem empfangenen Datenpaket enthaltenen Prüfzeichen verglichen wird, wobei zur Berechnung das Prüfzeichen des letzten gesandten Datenpakets als Startwert genommen wird. Mit dieser Auslegung des Sicherheitslayers kann auf die Verwendung von Sequenznummern in den Sicherheitsdatenpaketen, wie sie beim Profisafe-Protokoll notwendig sind, um eine korrekte Datenpaketabfolge zu erkennen, verzichtet werden. Die korrekte Datenpaketabfolge kann nämlich vom erfindungsgemäßen Kommunikationsteilnehmer direkt aus den übermittelten Prüfzeichen abgeleitet werden, in dem der Startwert des Prüfzeichens bestimmt wird, der wiederum dem empfangenden Kommunikationsteilnehmer vorliegt.

Gemäß einer weiteren bevorzugten Ausführungsform wird die Datenkommunikation im erfindungsgemäßen Sicherheitslayer so ausgelegt, dass ein Kommunikationsteilnehmer als Initiator der Datenübertragung auftritt und zu Beginn einer Datenübertragung zwischen den beiden Kommunikationsteilnehmern ein Identifizierungsdatenpaket zum anderen Kommunikationsteilnehmer überträgt, wobei vorzugsweise als Startwert des Prüfzeichens für das Identifikationsdatenpaket ein fester Wert oder eine Kennung des anderen Kommunikationsteilnehmers verwendet wird. Mit dieser Vorgehensweise kann zuverlässig ein Datenaustausch von sicherheitsrelevanten Daten im Automatisierungssystem nach einer Kommunikationsunterbrechung gewährleistet werden. Bevorzugt ist es dabei weiterhin als Kennung im versandten Identifizierungsdatenpaket ein Datum zur Identifizierung des anderen Kommunikationsteilnehmers zu verwenden, wodurch eine zuverlässige und einfache Initialisierung der Kommunikationsverbindung möglich ist.

Gemäß einer weiteren bevorzugten Ausführungsform wird zu Beginn einer Datenübertragung zwischen den Kommunikationsteilnehmern ein weiteres Datum, vorzugsweise vom als Initiator der Datenübertragung auftretenden Kommunikationsteilnehmer an das Identifizierungsdatenpaket anschließend, in einem weiteren Datenpaket zum anderen Kommunikationsteilnehmer übertragen. Dieses weitere Datum ist eine zufällige oder eine sich nach einem vorgegebenen Algorithmus verändernde Session-Kennung. Die Session-Kennung sorgt dafür, dass auch nach einer Unterbrechung der Kommunikationsverbindung und einer Wiederinitialisierung keine sich wiederholenden Datenpakete austreten.

Gemäß einer weiteren bevorzugten Ausführungsform werden zu Beginn einer Datenübertragung zwischen den Kommunikationsteilnehmern vorzugsweise vom als Initiator der Datenübertragung auftreten Kommunikationsteilnehmer Parameterdaten mit einem sich an das Identifizierungsdatenpaket und das Sessions-Datenpakete anschließenden Parameterdatenpaket zum anderen Kommunikationsteilnehmer übertragen. Hierdurch wird gewährleistet, dass im Rahmen des Sicherheitslayers auch die für die Gerätefunktionalität relevanten Betriebsparameter sicher übertragen werden. Bevorzugt ist es dabei weiterhin, dass Datenpaket mit einem Klassifizierungsdatum zu versehen, das die im Datenpaket übertragenen Daten kennzeichnet.

Gemäß einer weiteren bevorzugten Ausführungsform wird bei der Berechnung des Prüfzeichens vom Automatisierungssystem die Sequenznummer, die die jeweilige Telegrammsequenz der Datenübertragung zwischen den beiden Kommunikationsteilnehmern kennzeichnet, berücksichtigt. Die Sequenznummer wird dabei bevorzugt von den beiden Kommunikationsteilnehmern getrennt voneinander nach einem vorgegebenen Schema erzeugt. Durch Einberechnen der Sequenznummer wird zuverlässig gewährleistet, dass sich das Prüfzeichen beim Übergang von einer Telegrammsequenz zur anderen immer ändert. Hierdurch wird ausgeschlossen, dass dann, wenn aufeinander folgende Datentelegramme die gleichen Daten enthalten, sich ein identisches Prüfzeichen ergeben könnte, was dann zu einem Fehlalarm führen könnte. Die Sequenznummer muss dabei nicht in den Datenpaketen zwischen den Kommunikationsteilnehmern mit übertragen werden, da die Kommunikationsteilnehmer die Sequenznummer getrennt voneinander nach einem vorgegebenen Schema erzeugen können. Die Sequenznummer kann dabei in den einzelnen Kommunikationsteilnehmern z. B. durch Hochzahlen oder auch durch Entnahme aus einem vorgegebenen Nummernblock, den beide Kommunikationsteilnehmer kennen, erzeugt werden. Die Übertragung der Sequenznummer zwischen den Kommunikationsteilnehmern würde zu einem unnötig langem Datenpaket führen. Insbesondere dann, wenn lange Sequenznummern verwendet werden, um einen Überlauf der Sequenznummern bei einer Datenkommunikation zu verhindern.

Gemäß einer weitern bevorzugten Ausführungsform enthalten die zwischen den Kommunikationsteilnehmern übertragenen Datenpakete eine Verbindungskennung. Hierdurch wird gewährleistet, dass dann, wenn ein Kommunikationsteilnehmer mit verschiedenen weiteren Kommunikationsteilnehmern eine Übertragung von sicherheitsrelevanten Datenpaketen durchführt, keine Vertauschung der Datenpakete aufgrund eines zufällig gleichen Prüfzeichens von zwei von verschiedenen Kommunikationsteilnehmern empfangenen Datenpaketen auftritt.

Die Erfindung wird anhand der beigefügten Zeichnungen näher erläutert. Es zeigen:
Figur 1 die Grundstruktur eines Ethernet-gestützten Automatisierungssystems;
Figur 2 einen prinzipiellen Datenfluss und Abarbeitungsplan für einen erfindungsgemäßen Sicherheitslayer mit einer ersten Datenpaketform;
Figur 3A bis 3C einen erweiterten Datenfluss und Abarbeitungsplan für einen erfindungsgemäßen Sicherheitslayer mit einer zweiten Datenpaketform, wobei Figur 3A eine Initialisierungsdatenübertragung, Figur 3B eine Parameterdatenübertragung und Figur 3C eine Prozessdatenübertragung zeigt; und
Figur 4 einen weiteren prinzipiellen Datenfluss und Abarbeitungsplan für einen erfindungsgemäßen Sicherheitslayer mit einer dritten Datenpaketform.

Mit Kommunikationsnetzwerken lassen sich auf einfache Weise Daten und/oder Ressourcen zwischen Arbeitsstationen, im Weiteren auch Kommunikationsteilnehmer bezeichnet, austauschen und gemeinsam nutzen. Das Ethernet-Konzept ist dabei der am weitesten verbreitete Kommunikationsstandard in lokal begrenzten Kommunikationsnetzwerken. Beim Ethernet sind eine Mehrzahl von Kommunikationsteilnehmern über ein gemeinsames Übertragungsmedium miteinander verbunden, wobei die Verkapselung der zu übermittelnden Daten in sog. Datenpaketen, im Weiteren auch als Telegramme bezeichnet, mit einem vorbestimmten Format vorgenommen wird. Das Ethernet besteht dabei aus drei Bereichen, der Hardware, d. h. dem Übertragungsmedium und den Netzwerkschnittstellen der Kommunikationsteilnehmer, der Menge von Protokollen, die den Zugriff über das Übertragungsmedium steuern, und der Ethernet-Paketform. Zur Verbindung der Kommunikationsteilnehmer können dabei beliebige Netzwerktopologien genutzt werden.

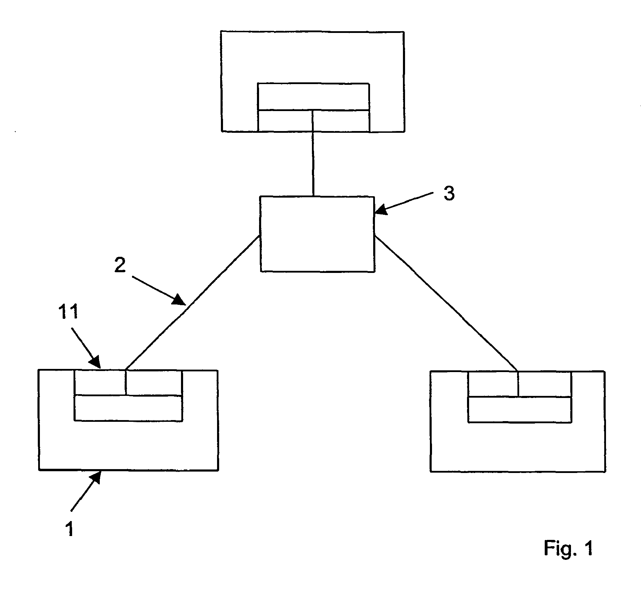

Figur 1 zeigt eine bevorzugte Netzwerktopologie für ein Ethernet. Hier sind die Kommunikationsteilnehmer 1 sternförmig über Punkt-zu-Punkt-Verbindungen 2 mit einer zentralen Vermittlungsstelle 3, dem sog. Switch, verbunden. Der Switch 3 sorgt dafür, dass ankommende Datentelegramme ausschließlich auf den Ausgang durchgeschaltet werden, an den der Kommunikationsteilnehmer angeschlossen ist, der das Telegramm empfangen soll. Die Datentelegramme werden dabei im Switch kurz zwischengespeichert, um auf den richtigen Ausgang ausgegeben werden zu können.

Jeder Kommunikationsteilnehmer 1 weist, wie Figur 1 zeigt, eine Netzwerkanschalteinheit 11 auf. Die Netzwerkanschalteinheit 11 nimmt die Kodierung der zu sendenden Daten und die Dekodierung der empfangenen Daten vor. Weiterhin werden in der Anschalteinheit 11 auch alle zum Betrieb des Netzwerkes notwendigen Steuermaßnahmen verwaltet, d. h. die Anschalteinheit 11 führt das Management und die Datenpaketbildung durch.

Beim Einsatz eines Ethernet-Netzwerkes, wie es in Figur 1 gezeigt ist, im Rahmen eines Automatisierungssystems, bei dem die Kommunikationsteilnehmer Steuerungsrechner und Sensor-Aktor-Maschinensysteme sind, ist es eine wichtige Anforderung neben der Echtzeitfähigkeit, d. h. der Notwendigkeit, dass die Steuerungsrechner die Prozesssignale an die Aktoren aufgrund der von den Sensoren erfassten Prozesssignale innerhalb festgelegter Prozesszeiten ausgeben, sicherzustellen, dass beim Ausfall des Automatisierungssystems bzw. einer wichtigen Komponente keine Gefahr für Mensch und Umwelt droht. Die Steuerungsrechner im Automatisierungssystem müssen deshalb neben normalen Steuerfunktionen noch Sicherheitsfunktionen ausführen, die gewährleisten, dass beim Ausfall einer wichtigen Komponente des Automatisierungssystems dafür gesorgt ist, dass das Automatisierungssystem nach dem sogenannten Fail-Safe-Prinzip automatisch in einen sicheren Zustand übergeht, d. h. z. B. eine Not-Aus-Schaltung der angeschlossenen Maschinen vorgenommen wird.

Die Anzahl der Sicherheitsfunktionen in einem auf einem Automatisierungssystem ablaufenden Steuerprogramm sind in der Regel geringer als die Anzahl der nicht kritischen Steuerfunktionen. Bei der Ausführung der Sicherheitsfunktionen muss aber zuverlässig ein fehlerfreier Ablauf der Datenübertragung gewährt werden. Insbesondere muss sichergestellt werden, dass bei der Übertragung von sicherheitsrelevanten Daten zwischen den Kommunikationsteilnehmern im Automatisierungssystem die Wahrscheinlichkeit, dass durch eine Störung der Übertragung die Daten so verfälscht werden, dass diese Verfälschung nicht mehr erkannt wird, minimiert ist.

Um zu gewährleisten, dass die Funktionalität von sicherheitsrelevanten Steuerfunktionen nicht durch nicht-sicherheitsrelevante Steuerfunktionen im Automatisierungsrechner beeinflusst wird, ist das auf der Datenübertragungsstrecke verwendete Netzwerkprotokoll mit einem zusätzlichen Sicherheitslayer zu versehen, der im Automatisierungssystem den Datenaustausch von Sicherheitsdaten zwischen den Kommunikationsteilnehmern steuert. Um eine sichere Übertragung von Datenpaketen auf einer Datenübertragungsstrecke zwischen zwei Kommunikationsteilnehmern im Rahmen des Sicherheitslayers in dem Automatisierungssystem zu gewährleisten, wird erfindungsgemäß jedes Datenpaket mit einem Prüfzeichen versehen, das aus den weiteren Daten des Datenpakets berechnet wird, wobei die Anschalteinheit 11 des Kommunikationsteilnehmers 1 das Prüfzeichen des letzten vom anderen Kommunikationsteilnehmer empfangenen Datenpakets als Startwert zur Berechnung des Prüfzeichens für ein an den anderen Kommunikationsteilnehmer zu sendendes nächstes Datenpaket nutzt.

Durch die erfindungsgemäße Vorgehensweise, bei der das Prüfzeichen in einem Datenpaket mit einem dynamischen Startwert berechnet wird, indem als Startwert immer das Prüfzeichen des vorher eingehenden Telegramms genutzt wird, kann gewährleistet werden, dass in einem Datenübertragungszyklus keine identischen Datenpakete, die zu einer Datenverfälschung führen könnten, auftreten. Identische Datenpakete stellen insbesondere beim Einsatz einer Ethernet-Topologie mit einem Switch, wie sie in Figur 1 gezeigt ist, eine Gefahr dar, da hier die zwischen den Kommunikationsteilnehmern ausgetauschten Datentelegramme zwischengespeichert und erst zu einem späteren Zeitpunkt dann an den Adressaten weitergegeben werden können.

Bei dem erfindungsgemäßen Verfahren zur Datenübertragung kann der ein Datenpaket empfangende Kommunikationsteilnehmer weiterhin leicht prüfen, ob das Datenpaket korrekt ist, indem das Prüfzeichen des empfangenen Datenpakets berechnet und mit dem in dem empfangenen Datenpaket enthaltenen Prüfzeichen verglichen wird, wobei zur Berechnung das Prüfzeichen des letzten gesandten Datenpakets als Startwert genommen wird. Dies wird vorzugsweise von der Anschalteinheit 11 des Kommunikationsteilnehmers 1 durchgeführt. Falls eine Übereinstimmung des berechneten Prüfzeichens mit dem im empfangenen Datenpaket enthaltenen Prüfzeichen besteht, kann das empfangene Datenpaket als korrekt gewertet werden.

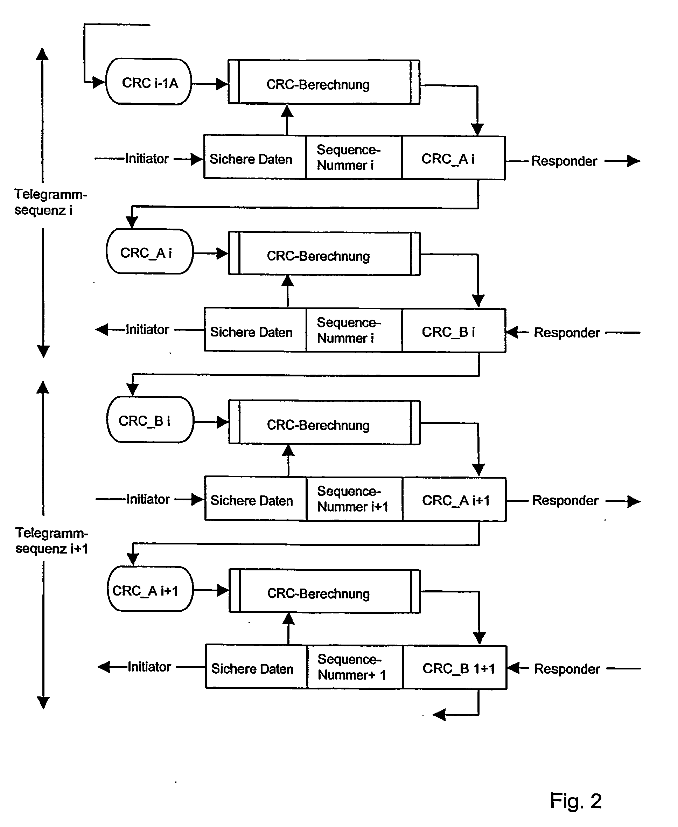

Figur 2 zeigt einen Datenfluss und Abarbeitungsplan des erfindungsgemäßen Verfahrens zur Datenübertragung zwischen zwei Kommunikationsteilnehmern. Der eine Kommunikationsteilnehmer der Datenübertragung, bei Automatisierungssystemen ein Steuerungsrechner tritt dabei als Initiator der Datenübertragung auf. Eine ein Aktor-Sensor-System enthaltene Maschine im Automatisierungssystem stellt bei der erfindungsgemäßen Datenübertragung den Responder dar. Figur 2 zeigt zwei Telegrammsequenzen beim Datenaustausch zwischen dem Initiator und dem Responder, wobei in jeder Telegrammsequenz jeweils ein Datenpaket vom Initiator zum Responder und vom Responder zurück zum Initiator übertragen wird. Die Datenpakete setzt sich dabei aus einem Nutzdatenbereich, der die sicheren Daten, d. h. die im Rahmen der Sicherheitssteuerung notwendigen Prozesssignale enthält und einem Steuerdatenbereich, der hier optional eine Sequenznummer und zwingend ein Prüfzeichen umfasst, zusammen.

Die Sequenznummer zeigt an, um welche Telegrammsequenz es sich bei der Datenübertragung im Rahmen der Sicherheitsprogrammausführung handelt. Der Initiator gibt dabei in seinem an den Responder gesandten Datenpaket die Sequenznummer vor, worauf der Responder die Sequenznummer in dem rückgesendeten Datenpaket wieder mit zurück überträgt. In der nächsten Telegrammsequenz wird dann die Sequenznummer vom Initiator im versandten Datenpaket um eins erhöht.

Auf die Übermittlung einer Sequenznummer kann jedoch im Rahmen der erfindungsgemäßen Datenübertragung grundsätzlich verzichtet werden. Um festzustellen, dass eine unverfälschte Datenübertragung stattgefunden hat, ist sowohl im Initiator, als auch im Responder nämlich ausreichend, das Prüfzeichen des empfangenen Datenpaketes auszuwerten. Das Prüfzeichen ist vorzugsweise ein Blocksicherungszeichen CRC (cyclic redundancy check), mit dem Fehler im Datenpaket mit sehr hoher Sicherheit erkannt werden können. Der CRC-Wert wird dabei aus den Nutzdaten und ggf. auch aus der Sequenznummer im Datenpaket berechnet, wobei erfindungsgemäß als Startwert der CRC-Berechnung der CRC-Wert des letzten empfangenen Datenpakets verwendet wird.

Bei dem in Figur 2 dargestellten, vom Initiator an den Responder versendeten Datenpaket der Telegrammsequenz i wird der CRC-Wert des zu versendenden Datenpakets mit dem CRC-Wert des letzten vom Responder erhaltenen CRC-Wertes CRC_A i-1 berechnet. Der sich dann ergebenen CRC-Wert im versandten Datenpaket ist CRC_A i. Diesen CRC-Wert nutzt dann der Responder wieder als Startwert bei der CRC-Berechnung des vom Responder an den Initiator zurückgesandten Datenpakets, wobei sich als CRC-Wert dann CRC_B i ergibt. Dieser CRC-Wert wird dann in der nächsten Telegrammsequenz i+1 als Startwert zur CRC-Berechnung durch den Initiator für das nächste an den Responder zu versendende Datenpaket benutzt. Der CRC-Wert CRC_A i+1 wird dann wiederum zur CRC-Berechnung des vom Responder zurückgesandten Datenpakets eingesetzt, wobei sich als CRC-Wert CRC_B i+1 ergibt. Der korrekte Empfang eines Datenpakets kann vom empfangenen Kommunikationsteilnehmer auf einfachen Weise immer dadurch festgestellt werden, dass der CRC-Wert des empfangenen Datenpakets mit einem auf der Basis des gespeicherten Startwertes berechneten CRC-Wertes verglichen wird.

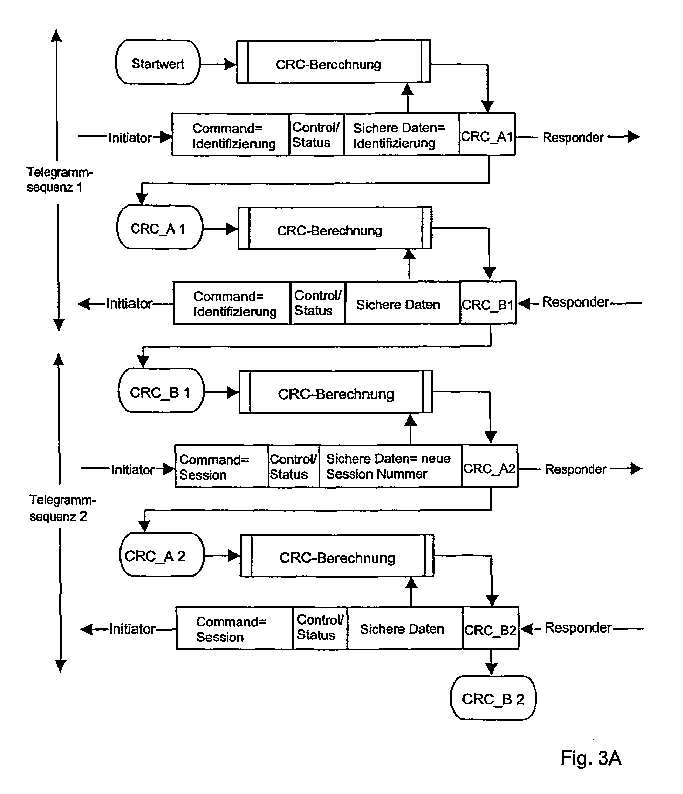

Um erfindungsgemäß weiter zu gewährleisten, dass ein Sicherheitsprogramm zwischen den richtigen Kommunikationsteilnehmern am Netz gestartet wird, wird beim Neustart des Sicherheitsprogramms oder bei der Wiederaufnahme nach einer Kommunikationsunterbrechung eine Initialisierungsphase durchgeführt, wie sie in Figur 3A gezeigt ist. Das in Figur 3A gezeigte Datenpaket enthält dabei ein Kommando-Datenfeld, das die Bedeutung der Nutzdaten im Datenpaket angibt, z. B. ob es sich bei den Nutzdaten um Identifizierungsdaten oder Prozessdaten handelt. Alternativ kann jedoch die Bedeutung der Nutzdaten in den Datenpaketen einer Datenpaketfolge zur Ausführung eines Sicherheitsprogramms auch von der Reihenfolge der Datenpakete abhängig gemacht werden. So kann z. B. festgelegt sein, dass die ersten beiden vom Initiator zum Responder gesandten Daten immer Initialisierungsdaten enthalten, die weiteren Datenpakte dann sichere Daten. Gleichzeitig kann auch festgelegt sein, dass der Responder immer nur Prozessdaten an den Initiator überträgt. Die Länge der Datenpakete kann grundsätzlich fest oder variabel gestaltet sein. Neben dem Kommandodatenfeld kann das Datenpaket auch noch weitere Datenfelder, z. B. ein Kontroll-/Status-Feld, wie in Figur 3A dargestellt, enthalten.

Wie in Figur 3A weiter gezeigt ist, führt der Initiator beim Neustart des Steuerungsprogramms, um eine sichere Datenkommunikation aufzubauen, eine Initialisierung durch, indem er in der ersten Telegrammsequenz ein Datenpaket mit dem Kommando-Datenfeld Identifizierung und sicheren Daten, die eine Identifizierung ermöglichen, an den Responder sendet. Das Identifizierungsdatenpaket ist dabei mit einem CRC-Wert als Prüfzeichen geschützt, dessen Startwert ein fest vorgegebener Wert, z. B. die Gerätekennung des Responders, ist. Die Identifizierungsdaten können dabei von außen eingestellte Adressdaten, die die beiden Kommunikationsteilnehmer oder auch nur den Responder kennzeichnen sein. Es kann sich dabei auch um Gerätekennungen und/oder Seriennummern des Initiators bzw. Responders handeln.

Der Responder, der den Startwert der CRC-Berechnung des empfangenen ersten Datenpakets kennt, überprüft den CRC-Wert CRC_A 1 des empfangenen ersten Datenpakets vom Initiator, um festzustellen, ob eine korrekte Datenübertragung stattgefunden hat. Anschließend nimmt der Responder dann den CRC-Wert CRC_A 1 aus dem ersten Datenpaket des Initiators als Startwert zur CRC-Berechnung CRC_B 1 des Datenpakets, das an den Initiator zurück geschickt werden soll. Dieses rückgesandte Datenpaket verwendet als Kommando vorzugsweise dieselbe Kennung, wie sie im Kommando-Datenteil des vom Initiator übertragenen Identifizierungsdatenpakets enthalten ist, um anzuzeigen, dass es sich um das rückgesandte Datenpaket der ersten Telegrammsequenz handelt. Das vom Responder an den Initiator zurückgesandte Datenpaket der ersten Telegrammsequenz wird dann vom Initiator durch Berechnung der zu erwartenden CRC-Summe auf der Basis des bekannten Startwertes CRC_A 1 und Vergleich mit der CRC-Summe CRC_B 1 des empfangenen Datenpakets auf die korrekte Datenübertragung hin überprüft.

In einer zweiten Telegrammsequenz sendet der Initiator dann ein weiteres Initialisierungsdatenpaket an den Responder, das als Kommando-Session und als sichere Daten eine Session-Nummer enthält. Der CRC-Wert CRC_A 2 dieses zweiten Datenpakets wird dabei mit dem CRC-Wert CRC_B 1 des vom Responder zurückgesandten Datenpakets berechnet. Die übertragene Session-Nummer kann dabei zufällig oder nach einem vorgegebenen Algorithmus generiert werden und soll gewährleisten, dass nach einer Unterbrechung der Kommunikationsverbindung keine Datenpakete aus der vorausgegangenen Datenübertragung mehr übertragen bzw. diese erkannt werden.

Der Responder, der den Startwert CRC_B 1 zur CRC-Berechnung des vom Initiator gesandten Datenpakets kennt, überprüft das empfangene Session-Datenpaket durch Berechnen des zu erwartenden CRC-Wertes auf der Basis des bekannten Startwertes und nimmt den CRC-Wert CRC_A 2 dann wiederum als Startwert für ein zweites an den Initiator zu sendendes Datenpaket, mit dem optional sichere Daten übertragen werden können. Bei diesem zweiten zurückgesandten Datenpaket wird als Kommando vorzugsweise das Kommando Session aus dem empfangenen Datenpaket des Initiators verwendet.

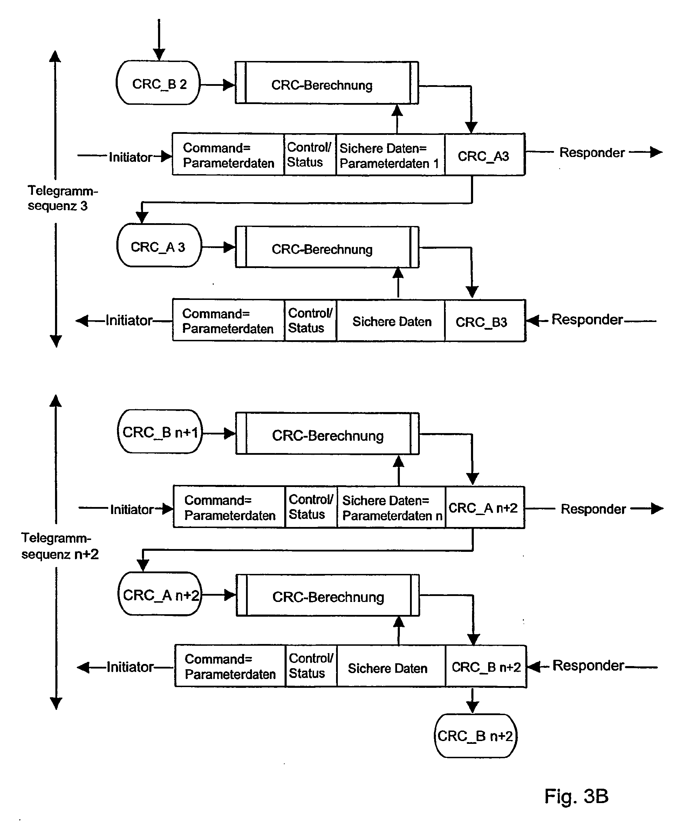

Nach dem Aufbau der sicheren Kommunikationsverbindung können dann optional vom Initiator noch sichere Parameterdaten, die zum Betrieb des Responders notwendig sind, vom Initiator zum Responder übertragen werden. In Figur 3B sind zwei solche Telegrammsequenzen, Telegrammsequenz 3, die sich an die Übertragung des Session-Datenpakets anschließt, und die letzte ausgeführte Telegrammsequenz mit Parameterdaten gezeigt.

Zum Übertragen der Datenpakete mit den Parameterdaten nimmt der Initiator den zuletzt empfangenen CRC-Wert CRC_B 2 als Startwert zur CRC-Berechnung des ersten Parameterdatenpakets, das er weiter mit den Kommando Parameterdaten und sicheren Daten Parameter 1 versieht. Der Responder überprüft den CRC-Wert CRC_A 3 des empfangenen Datenpakets und nimmt diesen CRC-Wert als Startwert für eine CRC-Berechnung des Response-Datenpakets an den Initiator. Es können so beliebig viele sichere Parameterdaten an den Responder übertragen werden. Im in Figur 3B gezeigten Beispiel werden Telegrammsequenzen mit sicheren Parameterdaten vom Initiator auf den Responder übertragen. Der Responder überträgt in den Antwortdatenpaketen immer optional sichere Daten, wobei als Kommando in den Antwortdatenpaketen Parameterdaten verwendet wird.

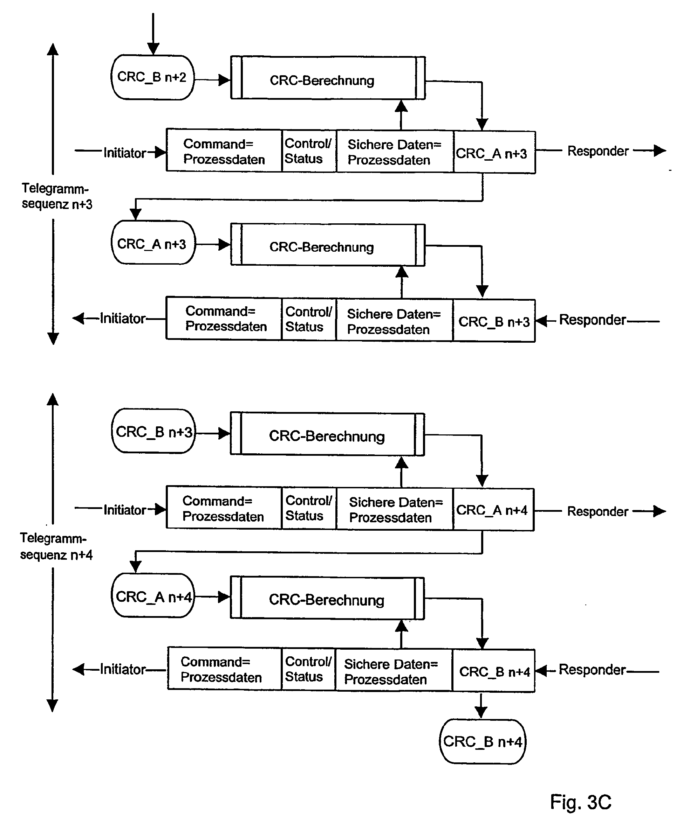

Nach Abschluss der Parameterübertragung führt der Initiator dann, wie in Figur 3C gezeigt ist, eine Prozessdatenübertragung durch. Dazu werden die Datenpakete vom Initiator mit dem Kommando Prozessdaten und mit den sicheren Daten Prozessdaten versehen und mit einer CRC-Summe CRC_A n+3 geschützt, die mit dem CRC-Wert CRC_B n+2 als Startwert berechnet wird, der in der letzten Parameterdaten-Response vom Responder zum Initiator übertragen wurde. Der Responder wiederum versendet die Prozessdaten in seinem Antwortdatenpaket geschützt mit der CRC-Summe CRC_B n+3, die mit dem vom Initiator übergebenen CRC-Summe CRC_A n+3 als Startwert berechnet ist.

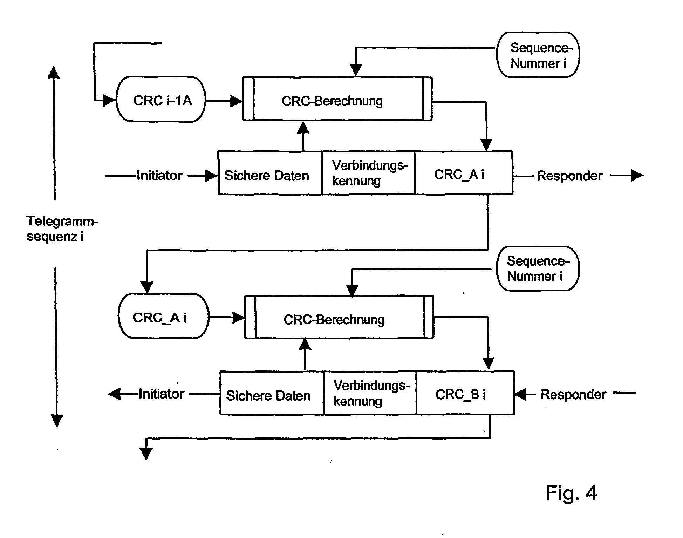

Figur 4 zeigt einen weiteren Datenfluss und Abarbeitungsplan für ein erfindungsgemäßes Verfahren zur Datenübertragung zwischen zwei Kommunikationsteilnehmern. Der Datenfluss und Abarbeitungsplan entspricht dabei im Wesentlichen dem in Figur 2 gezeigten Datenfluss und Abarbeitungsplan. Im Datenpaket wird jedoch im Gegensatz zu dem in Figur 2 gezeigten Datenpaket immer zusätzlich eine Verbindungskennung mit übertragen, wie sie bereits in Figur 3A in der Initialisierungsphase im Kommando-Datenteil im Rahmen des Identifizierungsdatenpakets übergeben wird. Die Verbindungskennung kann dabei, ähnlich wie die Identifizierungsdaten, gemäß Figur 3 eine von außen eingestellte Adresse, die die beiden Kommunikationsteilnehmer oder auch nur den Responder kennzeichnet, sein. Dabei kann es sich wiederum auch um Gerätekennungen und/oder Seriennummern des Initiators bzw. Responders handeln. Durch Übertragung der Verbindungskennung wird zuverlässig gewährleistet, dass dann, wenn der Initiator mit mehreren Respondern gleichzeitig eine sicherheitsrelevante Datenübertragung durchführt, aufgrund eines zufällig gleichen Prüfzeichens der von den verschiedenen Respondern enthaltenen Datenpakete keine Verwechslung der Datenpakete auftritt.

Darüber hinaus wird bei dem in Figur 4 gezeigten Datenfluss immer die Sequenznummer der Berechnung des Prüfzeichens von den jeweiligen Kommunikationsteilnehmern mit einbezogen. Diese Sequenznummer wird jedoch nicht mit übertragen, sondern von den Kommunikationsteilnehmern unabhängig nach dem gleichen Schema generiert. Die Sequenznummer kann dabei z. B. nach der Initialisierung automatisch hochgezählt oder aus einem fest vorgegebenen Nummernblock entnommen werden. Dadurch dass die Sequenznummer nicht mit übertragen wird, wird auch die Datenpaketlänge nicht unnötig verlängert. Gleichzeitig kann die von den Kommunikationsteilnehmern erzeugte Sequenz-nummer beliebig lang gewählt werden, um zuverlässig einen Überlauf zu verhindern. Durch Einbeziehung der Sequenznummer bei der Berechnung der Prüfzeichnung wird gewährleistet, dass dann, wenn die Datenpakete sich von einer Telegrammsequenz zur nächsten nicht ändern, sich trotzdem eine Änderung des Prüfzeichens ergibt und damit gewährleistet ist, dass nicht ein ungewollter Fehlalarm ausgelöst wird.

Mit der erfindungsgemäßen Vorgehensweise, beim Übertragen von Datenpaketen die Datenpakete mit Prüfzeichen zu versehen, die mit dem Prüfzeichen des letzten vom anderen Kommunikationsteilnehmer empfangenen Datenpakets als Startwert berechnet sind, besteht die Möglichkeit auf einfache Weise zuverlässig eine sichere Datenübertragung, wie sie im Rahmen eines Sicherheitslayers in einem Automatisierungssystem gefordert wird, zu erreichen. Insbesondere besteht dann die Möglichkeit als Netzwerkprotokoll das Ethernetprotokoll einzusetzen und eine Netzwerkstruktur mit Switches, die die Datenpakete zwischenspeichert, zu verwenden, da erfindungsgemäß verhindert wird, dass sich innerhalb des Ablaufs eines Sicherheitsprogramms Datenpakete wiederholen.

Erfindungsgemäß wird weiterhin die Datenübertragung so durchgeführt, dass zunächst eine Initialisierung mit einer Identifikationsnummer-Übertragung und einer SessionnummerÜbertragung durchgeführt wird, wodurch verhindert wird, dass bei einem Neustart eine Datenpaketwiederholung auftreten kann. Darüber hinaus besteht die Möglichkeit im Rahmen der erfindungsgemäßen Datenübertragung auch Betriebsparameter, die für die Gerätefunktionalität des Responders im Automatisierungssystem benötigt werden, zu übertragen.

## Patentansprüche

1. Verfahren zum Übertragen von Datenpaketen auf einer Datenübertragungsstrecke zwischen zwei Kommunikationsteilnehmern,
wobei die Datenpakete jeweils ein Prüfzeichen enthalten, das aus den weiteren Daten im Datenpaket berechnet wird,
**dadurch gekennzeichnet, dass**
der eine Kommunikationsteilnehmer das Prüfzeichen des letzten von dem anderen Kommunikationsteilnehmer empfangenen Datenpakets als Startwert bei der Berechung des Prüfzeichen für ein an den anderen Kommunikationsteilnehmer zu sendendes nächstes Datenpaket nutzt.

2. Verfahren nach Anspruch 1, **dadurch gekennzeichnet, dass** ein von dem einem Kommunikationsteilnehmer empfangenes Datenpaket als korrekt erkannt wird, indem das Prüfzeichen des empfangenen Datenpakets berechnet und mit dem in dem empfangenen Datenpaket enthaltenen Prüfzeichen verglichen wird, wobei zur Berechnung das Prüfzeichen des letzten gesandten Datenpakets als Startwert genommen wird.

3. Verfahren nach Anspruch 1 oder 2, **dadurch gekennzeichnet, dass** das Datenpaket ein Klassifizierungsdatum enthält, das die mit dem Datenpaket übertragenen Daten kennzeichnet.

4. Verfahren nach einem Ansprüche 1 bis 3, **dadurch gekennzeichnet, dass** der eine Kommunikationsteilnehmer als Initiator der Datenübertragung auftritt und zu Beginn einer Datenübertragung zwischen den beiden Kommunikationsteilnehmern ein Identifizierungsdatenpaket zum anderen Kommunikationsteilnehmer überträgt, das eine Kennung enthält.

5. Verfahren nach Anspruch 4, **dadurch gekennzeichnet, dass** der als Initiator der Datenübertragung auftretende Kommunikationsteilnehmer als Startwert des Prüfzeichens für das Identifizierungsdatenpaket einen festen Wert oder eine Kennung des anderen Kommunikationsteilnehmers verwendet.

6. Verfahren nach Anspruch 4 oder 5, **dadurch gekennzeichnet, dass** das vom als Initiator der Datenübertragung auftretenden Kommunikationsteilnehmer versandte Identifizierungsdatenpaket als Kennung ein Datum zur Identifizierung des anderen Kommunikationsteilnehmers enthält.

7. Verfahren nach einem der Ansprüche 4 bis 6, **dadurch gekennzeichnet, dass** zu Beginn einer Datenübertragung zwischen den beiden Kommunikationsteilnehmern als ein weiteres Datum eine zufällige oder eine sich nach einem vorgebenen Algorithmus verändernde Session-Kennung übertragen wird.

8. Verfahren nach Anspruch 7, **dadurch gekennzeichnet, dass** der als Initiator der Datenübertragung auftretende Kommunikationsteilnehmer die Session-Kennung mit einem sich an das Identifizierungsdatenpaket anschließenden Session-Datenpaket zum anderen Kommunikationsteilnehmer überträgt.

9. Verfahren nach einem der Ansprüche 4 bis 8, **dadurch gekennzeichnet, dass** zu Beginn einer Datenübertragung zwischen den beiden Kommunikationsteilnehmern Parameterdaten übertragen werden.

10. Verfahren nach Anspruch 9, **dadurch gekennzeichnet, dass** der als Initiator der Datenübertragung auftretende Kommunikationsteilnehmer die Parameterdaten mit wenigstens einem sich an das Identifizierungsdatenpaket und das Session-Datenpaket anschließenden Parameterdatenpaket zum anderen Kommunikationsteilnehmer überträgt.

11. Verfahren nach einem der Ansprüche 1 bis 10, **dadurch gekennzeichnet, dass** als Datenübertragungsstrecke ein Ethernet-basierender Feldbus verwendet wird.

12. Verfahren nach einem der Ansprüche 1 bis 11, **dadurch gekennzeichnet, dass** bei der Berechnung des Prüfzeichens eine Sequenznummer, die die jeweilige Telegrammsequenz der Datenübertragung zwischen den beiden Kommunikationsteilnehmern kennzeichnet, berücksichtigt wird.

13. Verfahren nach Anspruch 12, **dadurch gekennzeichnet, dass** die beiden Kommunikationsteilnehmer die eine Telegrammsequenz kennzeichnende Sequenznummer getrennt voneinander nach einem vorgebenden Schema erzeugen.

14. Verfahren nach einem der Ansprüche 1 bis 13, **dadurch gekennzeichnet, dass** die zwischen den beiden Kommunikationsteilnehmern übertragenen Datenpaketen jeweils eine Verbindungskennung beinhalten.

15. Automatisierungssystem mit zwei über eine Datenübertragungsstrecke (2) verbundenen Kommunikationsteilnehmern (1), die jeweils eine Anschalteinheit (11) aufweisen, um Datenpakete auf der Datenübertragungsstrecke zwischen den beiden Kommunikationsteilnehmern zu übertragen, wobei die Anschalteinheit (11) Mittel aufweist, Datenpakete mit einem aus den weiteren Daten im Datenpaket berechneten Prüfzeichen zu bilden,
**dadurch gekennzeichnet, dass**
der Startwert bei der Berechung des Prüfzeichens für ein an den anderen Kommunikationsteilnehmer zu sendendes Datenpaket das Prüfzeichen des letzten von dem anderen Kommunikationsteilnehmer empfangenen Datenpaket ist.

16. Automatisierungssystem nach Anspruch 15, **dadurch gekennzeichnet, dass** die Anschalteinheit (11) der Kommunikationsteilnehmer (1) Mittel aufweist, ein von dem einem Kommunikationsteilnehmer empfangenes Datenpaket als korrekt zu erkennen, indem das Prüfzeichen des empfangenen Datenpakets berechnet und mit dem in dem empfangenen Datenpaket enthaltenen Prüfzeichen verglichen wird, wobei zur Berechnung das Prüfzeichen des letzten gesandten Datenpakets als Startwert genommen wird.

17. Automatisierungssystem nach Anspruch 15 oder 16, **dadurch gekennzeichnet, dass** die Anschalteinheit (11) der Kommunikationsteilnehmer (1) Mittel aufweist, das Datenpaket mit einem Klassifizierungsdatum zu versehen, das die mit dem Datenpaket übertragenen Daten kennzeichnet.

18. Automatisierungssystem nach einem Ansprüche 15 bis 17, **dadurch gekennzeichnet, dass** der eine Kommunikationsteilnehmer als Initiator der Datenübertragung auftritt und seine Anschalteinheit (11) Mittel aufweist, als erstes zu übertragendes Datenpaket einer Datenübertragung zwischen den beiden Kommunikationsteilnehmern ein Identifizierungsdatenpaket zu erzeugen, das eine Kennung enthält.

19. Automatisierungssystem nach Anspruch 18, **dadurch gekennzeichnet, dass** die Anschalteinheit (11) des als Initiator der Datenübertragung auftretenden Kommunikationsteilnehmers als Startwert des Prüfzeichens für das Identifizierungsdatenpaket einen festen Wert oder eine Kennung des anderen Kommunikationsteilnehmers verwendet.

20. Automatisierungssystem nach Anspruch 18 oder 19, **dadurch gekennzeichnet, dass** das vom als Initiator der Datenübertragung auftretende Kommunikationsteilnehmer versandte Identifizierungsdatenpaket als Kennung ein Datum zur Identifizierung des anderen Kommunikationsteilnehmers enthält.

21. Automatisierungssystem nach einem der Ansprüche 18 bis 20, **dadurch gekennzeichnet, dass** die Anschalteinheit (11) des als Initiator der Datenübertragung auftretenden Kommunikationsteilnehmers Mittel aufweist, nach dem Identifizierungsdatenpaket ein Session-Datenpaket zu erzeugen, das eine zufällige oder eine sich nach einem vorgebenen Algorithmus verändernde Session-Kennung enthält.

22. Automatisierungssystem nach Anspruch 21, **dadurch gekennzeichnet, dass** die Anschalteinheit (11) des als Initiator der Datenübertragung auftretenden Kommunikationsteilnehmers Mittel aufweist, nach dem Identifizierungsdatenpaket und dem Session-Datenpaket wenigstens ein Parameterdatenpaket zu erzeugen, das Parameterdaten für den anderen Kommunikationsteilnehmer enthält.

23. Automatisierungssystem nach einem der Ansprüche 15 bis 22, **dadurch gekennzeichnet, dass** die Datenübertragungsstrecke ein Ethernet-basierender Feldbus ist.

24. Automatisierungssystem nach einem der Ansprüche 15 bis 23, **dadurch gekennzeichnet, dass** die Anschalteinheit (11) der Kommunikationsteilnehmer (1) Mittel aufweist, bei der Berechnung des Prüfzeichens eine Sequenznummer, die die jeweilige Telegrammsequenz der Datenübertragung zwischen den beiden Kommunikationsteilnehmer kennzeichnet, zu berücksichtigen.

25. Automatisierungssystem nach Anspruch 24, **dadurch gekennzeichnet, dass** die Anschalteinheit (11) der Kommunikationsteilnehmer (1) Mittel aufweist, die eine Telegrammsequenz kennzeichnende Sequenznummer nach einem vorgebenden Schema zu erzeugen.

26. Automatisierungssystem nach einem der Ansprüche 15 bis 25, **dadurch gekennzeichnet, dass** die Anschalteinheit (11) der Kommunikationsteilnehmer (1) Mittel aufweist, das Datenpaket mit einer Verbindungskennung zu versehen.

## Claims

1. Method of transmitting data packets on a data transmission link between two communication subscribers,
wherein the data packets respectively contain a check character which is calculated from the other data in the data packet,
**characterized in that** one communication subscriber uses the check character from the last data packet received by the other communication subscriber as start value for calculating the check character for a subsequent data packet to be sent to the other communication subscriber.

2. The method as claimed in claim 1, **characterized in that** a data packet received by one communication subscriber is identified as correct by calculating the check character for the received data packet and comparing it with the check character contained in the received data packet, the calculation being performed by taking the check character from the last data packet sent as start value.

3. The method as claimed in claim 1 or 2, **characterized in that** the data packet contains a classification data item which identifies the data transmitted with the data packet.

4. The method as claimed in one of claims 1 to 3, **characterized in that** one communication subscriber appears as the initiator of the data transmission and, at the start of a data transmission between the two communication subscribers, transmits an identification data packet containing an identifier to the other communication subscriber.

5. The method as claimed in claim 4, **characterized in that** the communication subscriber appearing as initiator of the data transmission uses a fixed value or an identifier for the other communication subscriber as start value for the check character for the identification data packet.

6. The method as claimed in claim 4 or 5, **characterized in that** the identification data packet sent by the communication subscriber appearing as initiator of the data transmission contains, as identifier, a data item for identifying the other communication subscriber.

7. The method as claimed in one of claims 4 to 6, **characterized in that**, at the start of a data transmission between the two communication subscribers, a random session identifier or a session identifier changing on the basis of a prescribed algorithm is transmitted as a further data item.

8. The method as claimed in claim 7, **characterized in that** the communication subscriber appearing as initiator of the data transmission transmits the session identifier to the other communication subscriber with a session data packet which follows the identification data packet.

9. The method as claimed in one of claims 4 to 8, **characterized in that** parameter data are transmitted between the two communication subscribers at the start of a data transmission.

10. The method as claimed in claim 9, **characterized in that** the communication subscriber appearing as initiator of the data transmission transmits the parameter data to the other communication subscriber with at least one parameter data packet which follows the identification data packet and the session data packet.

11. The method as claimed in one of claims 1 to 10, **characterized in that** the data transmission link used is an Ethernet-based field bus.

12. The method as claimed in one of claims 1 to 11, **characterized in that** the calculation of the check character takes account of a sequence number which identifies the respective message sequence of the data transmission between the two communication subscribers.

13. The method as claimed in claim 12, **characterized in that** the two communication subscribers produce the sequence number identifying a message sequence separately from one another according to a prescribing scheme.

14. The method as claimed in one of claims 1 to 13, where the data packets transmitted between the two communication subscribers respectively contain a connection identifier.

15. An automation system having two communication subscribers (1) which are connected via a data transmission link (2) and which respectively have an interface unit (11), for the purpose of transmitting data packets on the data transmission link between the two communication subscribers, whereby the interface unit (11) comprises means of forming data packets with a check character calculated from the other data in the data packet, the start value for calculating the check character for a data packet to be sent to the other communication subscriber being the check character from the last data packet received by the other communication subscriber.

16. The automation system as claimed in claim 15, **characterized in that** the interface unit (11) of the communication subscribers (1) comprises means of identifying a data packet received by one communication subscriber as correct by calculating the check character for the received data packet and comparing it with the check character contained in the received data packet, the calculation being performed by taking the check character from the last data packet sent as start value.

17. The automation system as claimed in claim 15 or 16,
**characterized in that**:the interface unit (11) of the communication subscribers (1) comprises means of providing the data packet with a classification data item which identifies the data transmitted with the data packet.

18. The automation system as claimed in one of claims 15 to 17, **characterized in that** one communication subscriber appears as the initiator of the data transmission, and its interface unit (11) comprises means of producing an identification data packet containing an identifier as the first data packet to be transmitted in a data transmission between the two communication subscribers.

19. The automation system as claimed in claim 18, **characterized in that** the interface unit (11) of the communication subscriber appearing as initiator of the data transmission uses a fixed value or an identifier for the other communication subscriber as start value for the check character for the identification data packet.

20. The automation system as claimed in claim 18 or 19,
**characterized in that** the identification data packet sent by the communication subscriber appearing as initiator of the data transmission contains, as identifier, a data item for identifying the other communication subscriber.

21. The automation system as claimed in one of claims 18 to 20, **characterized in that** the interface unit (11) of the communication subscriber appearing as initiator of the data transmission comprises means of producing, after the identification data packet, a session data packet which contains a random session identifier or a session identifier which changes on the basis of a prescribed algorithm.

22. The automation system as claimed in claim 21, **characterized in that** the interface unit (11) of the communication subscriber appearing as initiator of the data transmission comprises means of producing, after the identification data packet and the session data packet, at least one parameter data packet which contains parameter data for the other communication subscriber.

23. The automation system as claimed in one of claims 15 to 22, **characterized in that** the data transmission link is an Ethernet-based field bus.

24. The automation system as claimed in one of claims 15 to 23, **characterized in that** the interface unit (11) of the communication subscribers (1) comprises means of taking account of a sequence number identifying the respective message sequence of the data transmission between the two communication subscribers when calculating the check character.

25. The automation system as claimed in claim 24, **characterized in that** the interface unit (11) of the communication subscribers (1) comprises means of producing the sequence number identifying a message sequence on the basis of a prescribing scheme.

26. The automation system as claimed in one of claims 15 to 25, **characterized in that** the interface unit (11) of the communication subscribers (1) comprises means of providing the data packet with a connection identifier.

## Revendications

1. Procédé de transmission de paquets de données sur une section de transmission de données entre deux partenaires de communication, les paquets de données contenant respectivement un caractère de contrôle qui est calculé à partir des autres données dans le paquet de données, **caractérisé en ce qu'**un partenaire de communication utilise le caractère de contrôle du dernier paquet de données reçu par l'autre partenaire de communication comme valeur de départ lors du calcul du caractère de contrôle pour un paquet de, données suivant à envoyer à l'autre partenaire de communication.

2. Procédé selon la revendication 1, **caractérisé en ce qu'**un paquet de données reçu par l'un des partenaires de communication est reconnu correct **en ce que** le caractère de contrôle du paquet de données reçu est calculé et comparé avec le caractère de contrôle contenu dans le paquet de données reçu, le caractère de contrôle du dernier paquet de données envoyé étant pris comme valeur de départ pour le calcul.

3. Procédé selon la revendication 1 ou 2,
**caractérisé en ce que** le paquet de données contient une date de classification qui caractérise les données transmises avec le paquet de données.

4. Procédé selon l'une des revendications 1 à 3, **caractérisé en ce que** l'un des partenaires de communication apparaît en tant qu'initiateur de la transmission des données et, au début d'une transmission de données entre les deux partenaires de communication, transmet à l'autre partenaire de communication un paquet de données d'identification qui contient un identifiant.

5. Procédé selon la revendication 4, **caractérisé en ce que** le partenaire de communication apparaissant en tant qu'initiateur de la transmission des données utilise comme valeur de départ du caractère de contrôle pour le paquet de données d'identification une valeur fixe ou un identifiant de l'autre partenaire de communication.

6. Procédé selon la revendication 4 ou 5,
**caractérisé en ce que** le paquet de données d'identification envoyé par le partenaire de communication apparaissant en tant qu'initiateur de la transmission des données contient comme identifiant une date d'identification de l'autre partenaire de communication.

7. Procédé selon l'une des revendications 4 à 6, **caractérisé en ce qu'**au début d'une transmission de données entre les deux partenaires de communication, un identifiant de session aléatoire ou qui varie selon un algorithme prédéfini est transmis en tant que date supplémentaire.

8. Procédé selon la revendication 7, **caractérisé en ce que** le partenaire de communication apparaissant en tant qu'initiateur de la transmission des données transmet l'identifiant de session à l'autre partenaire de communication avec un paquet de données de session qui se rattache au paquet de données d'identification.

9. Procédé selon l'une des revendications 4 à 8, **caractérisé en ce que** des données de paramètre sont transmises au début d'une transmission de données entre les deux partenaires de communication.

10. Procédé selon la revendication 9, **caractérisé en ce que** le partenaire de communication apparaissant en tant qu'initiateur de la transmission des données transmet les données de paramètre à l'autre partenaire de communication avec au moins un paquet de données de paramètre qui se rattache au paquet de données d'identification et au paquet de données de session.

11. Procédé selon l'une des revendications 1 à 10, **caractérisé en ce que** la section de transmission de données utilisée est un bus de terrain sur base Ethernet.

12. Procédé selon l'une des revendications 1 à 11, **caractérisé en ce que** lors du calcul du caractère de contrôle, il est tenu compte d'un numéro de séquence qui caractérise la séquence de télégrammes correspondante de la transmission de données entre les deux partenaires de communication.

13. Procédé selon la revendication 12, **caractérisé en ce que** les deux partenaires de communication génèrent le numéro de séquence caractérisant une séquence de télégrammes séparément l'un de l'autre d'après un schéma prédéfini.

14. Procédé selon l'une des revendications 1 à 13, **caractérisé en ce que** les paquets de données transmis entre les deux partenaires de communication contiennent respectivement un identifiant de liaison.

15. Système d'automatisation comprenant deux partenaires de communication (1) reliés par le biais d'une section de transmission de données (2), lesquels présentent respectivement une unité de connexion (11), pour transmettre des paquets de données sur la section de transmission de données entre les deux partenaires de communication, l'unité de connexion (11) présentant des moyens pour former des paquets de données avec un caractère de contrôle calculé à partir des autres données dans le paquet de données, **caractérisé en ce que** la valeur de départ lors du calcul du caractère de contrôle pour un paquet de données à envoyer à l'autre partenaire de communication est le caractère de contrôle du dernier paquet de données reçu par l'autre partenaire de communication.

16. Système d'automatisation selon la revendication 15, **caractérisé en ce que** l'unité de connexion (11) du partenaire de communication (1) présente des moyens pour reconnaître qu'un paquet de données reçu par le partenaire de communication est correct **en ce que** le caractère de contrôle du paquet de données reçu est calculé et comparé avec le caractère de contrôle contenu dans le paquet de données reçu, le caractère de contrôle du dernier paquet de données envoyé étant pris comme valeur de départ pour le calcul.

17. Système d'automatisation selon la revendication 15 ou 16, **caractérisé en ce que** l'unité de connexion (11) du partenaire de communication (1) présente des moyens pour munir le paquet de données d'une date de classification qui caractérise les données transmises avec le paquet de données.

18. Système d'automatisation selon l'une des revendications 15 à 17, **caractérisé en ce que** l'un des partenaires de communication apparaît en tant qu'initiateur de la transmission des données et son unité de connexion (11) présente des moyens pour générer comme premier paquet de données à transmettre d'une transmission de données entre les deux partenaires de communication un paquet de données d'identification qui contient un identifiant.

19. Système d'automatisation selon la revendication 18, **caractérisé en ce que** l'unité de connexion (11) du partenaire de communication qui apparaît en tant qu'initiateur de la transmission des données utilise comme valeur de départ du caractère de contrôle pour le paquet de données d'identification une valeur fixe ou un identifiant de l'autre partenaire de communication.

20. Système d'automatisation selon la revendication 18 ou 19, **caractérisé en ce que** le paquet de données d'identification envoyé par le partenaire de communication apparaissant en tant qu'initiateur de la transmission des données contient comme identifiant une date d'identification de l'autre partenaire de communication.

21. Système d'automatisation selon l'une des revendications 18 à 20, **caractérisé en ce que** l'unité de connexion (11) du partenaire de communication qui apparaît en tant qu'initiateur de la transmission des données présente des moyens pour générer après le paquet de données d'identification un paquet de données de session qui contient un identifiant de session aléatoire ou qui varie selon un algorithme prédéfini.

22. Système d'automatisation selon la revendication 21, **caractérisé en ce que** l'unité de connexion (11) du partenaire de communication qui apparaît en tant qu'initiateur de la transmission des données présente des moyens pour générer après le paquet de données d'identification et le paquet de données de session au moins un paquet de données de paramètre qui contient des données de paramètre pour l'autre partenaire de communication.

23. Système d'automatisation selon l'une des revendications 15 à 22, **caractérisé en ce que** la section de transmission de données utilisée est un bus de terrain sur base Ethernet.

24. Système d'automatisation selon l'une des revendications 15 à 23, **caractérisé en ce que** l'unité de connexion (11) du partenaire de communication (1) présente des moyens pour tenir compte, lors du calcul du caractère de contrôle, d'un numéro de séquence qui caractérise la séquence de télégrammes correspondante de la transmission de données entre les deux partenaires de communication.

25. Système d'automatisation selon la revendication 24, **caractérisé en ce que** l'unité de connexion (11) du partenaire de communication (1) présente des moyens pour générer le numéro de séquence caractérisant une séquence de télégrammes d'après un schéma prédéfini.

26. Système d'automatisation selon l'une des revendications 15 à 25, **caractérisé en ce que** l'unité de connexion (11) du partenaire de communication (1) présente des moyens pour munir le paquet de données d'un identifiant de liaison.
